# EUROPÄISCHE PATENTSCHRIFT

(11) **EP 1 433 337 B1**
(45) Veröffentlichungstag und Bekanntmachung des Hinweises auf die Patenterteilung: **25.05.2005**
(21) Anmeldenummer: 02774346.7
(22) Anmeldetag: 12.09.2002
(51) Int. Cl.: H04Q 3/00, H04M 7/00

(54) **SIGNALISIERUNGSVERFAHREN UND -ANORDNUNG**
SIGNALLING METHOD AND ARRANGEMENT
PROCEDE ET ENSEMBLE DE SIGNALISATION

(30) Priorität: 01.10.2001 DE 10148469
(43) Veröffentlichungstag der Anmeldung: 30.06.2004
(73) Patentinhaber: SIEMENS AKTIENGESELLSCHAFT, 80333 München (DE)
(72) Erfinder: LUEKEN, Joachim, 80686 München (DE)
(86) Internationale Anmeldenummer: PCT/DE2002/003403
(87) Internationale Veröffentlichungsnummer: WO 2003/032654

(56) Entgegenhaltungen:
- WO-A-01/65808

## Beschreibung

Die Erfindung betrifft ein Signalisierungsverfahren nach dem Oberbegriff des Anspruchs 1 und eine Anordnung zur Ausführung dieses Verfahrens.

In modernen Telekommunikationsnetzen - insbesondere digitalen Festnetzen, wie dem ISDN, oder auch bei den Mobilfunkstandards GSM (Global System for Mobile Communication) und UMTS (Universal Mobile Telecommunication System) - wird das Zeichengabesystem Nr. 7 (auch CCS7 = Common Channel Signalling Systems 7) eingesetzt. Dies bezeichnet ein modulares digitales Signalisierungssystem, daß auf der Trennung der Übertragung von Nutzinformationen und Steuerungsinformationen aufbaut. So entsteht ein Netz ausschließlich für Signalisierungsinformationen, welches nicht nur logisch, sondern auch physisch von den Leitungen zur Nutzdatenübertragung getrennt ist.

Ein grundlegendes Konzept dieses Signalisierungssystems besteht in der Aufteilung der CCS7-Funktionen in für alle Anwendungen übereinstimmende MTPs (Message Transfer Parts) in den unteren drei der vier Protokollschichten und anwendungsspezifische UPs (User Parts) der obersten Schicht. (Unter "User" wird hier kein Teilnehmer, sondern eine das Signalisierungssystem nutzende Instanz im Netz verstanden.)

Für die Nutzung von Diensten und Dienstmerkmalen im ISDN, die sich aus der Integration von Telefon- und Datendiensten ergeben, wurden verschiedene Varianten von sogenannten ISUPs (ISDN User Parts) geschaffen. Mit ISUP werden insbesondere Daten für die Auf- und Abbau und die Überwachung von leitungsvermittelten B-Kanal-Verbindungen zwischen den Netzknoten im ISDN übertragen. Die ISUP werden im Rahmen der Standardisierungsvorgaben seitens der ITU auf nationaler Ebene mit einer gewissen Spezifik gestaltet. Für die Signalisierung internationaler Telekommunikationsverbindungen sind daneben sogenannte internationale ISUP geschaffen wurden.

In traditionellen ISUP-Netzen wird das Interworking zwischen den ISUP-Varianten für internationale Verbindungen in einem internationalen Gateway ausgeführt. Für internationale Rufe konvertiert das abgehende internationale Gateway den nationalen ISUP in den ITU-T-konformen internationalen ISUP. Im Zielnetz wird im ankommenden internationalen Gateway dieser internationale ISUP wieder in einen nationalen ISUP konvertiert.

Seit einiger Zeit findet die Sprachübertragung über IP-basierte Datennetze (VoIP = Voice over IP), insbesondere das Internet, als ein spezielles Telekommunikationsverfahren verstärkte Beachtung. Nachdem ursprünglich wesentliche Kosteneinsparungen erwartet worden waren und die Entwicklungsanstrengungen zur Realisierung entsprechender Schnittstellen und sonstiger Systemkomponenten stimuliert hatten, stehen heute die vorteilhaften Möglichkeiten zur Nutzung von Mehrwertdiensten im Vordergrund.

Im Zusammenhang mit der Entwicklung der VoIP werden zunehmend komfortable Dienste realisiert und angeboten, wie z. B. Videokonferenzen aus mehreren Teilnehmern (Multicasting). Hierfür steht als international genormtes Signalisierungsprotokoll für einen Rufaufbau zwischen Teilnehmern SIP (Session Initiation Protocol) zur Verfügung. Im Gegensatz zu Festnetzteilnehmern ist der Aufenthaltsort eines SIP Teilnehmers nicht leitungsgebunden, sondern durch eine flexible Regisrierung geografisch nicht eingeschränkt. Daher ist die Hauptfunktion von SIP das Auffinden des derzeitigen Aufenthaltsortes des gerufenen Teilnehmers. Mit dem Rufaufbau (Sessionaufbau) transportiert SIP eine Session Description, die den Teilnehmern erlaubt, die Art der Kommunikation (z. B. Audio oder Video) für diese Session auszuhandeln.

SIP-T (d.h. SIP for telephones) ist eine SIP Protokollerweiterung zum transparenten Transport von ISUP-Signalisierungsinformationen über ein VoIP Netzwerk. Damit gewährleistet SIP-T Featuretransparenz für Teilnehmer, die an PSTN/ISDN-Vermittlungsstellen angeschlossen sind. Ein beispiel ist dem Dokument WO 01 65 808 zu entnehmen.

Die Implementierung von SIP-T erfordert jedoch, dass die ISUP-Protokollvariante am Eingang und Ausgang des VoIP Netzes identisch ist, weil im VoIP Netz keine Umsetzung von ISUP Protokollelementen durchgeführt werden kann. Will ein Netzbetreiber A somit über das VoIP Netz sowohl netzinternen Verkehr als auch externen Verkehr zu einem Netzbetreiber B abwickeln, ergibt sich ein Interworkingproblem, weil die ISUP-Varianten in den Netzen A und B in den meisten Fällen unterschiedlich sind.

Der Erfindung liegt daher die Aufgabe zugrunde, ein verbessertes Verfahren anzugeben, mit dem unterschiedliche ISUP-Varianten über ein SIP-T-Netz problemlos zu betreiben sind. Weiter soll ein zu dessen Durchführung geeignete Anordnung bereitgestellt werden.

Diese Aufgabe wird durch ein Signalisierungsverfahren mit den Merkmalen des Anspruchs 1 bzw. eine Anordnung nach Anspruch 3 gelöst.

Es werden mit diesem Mechanismus mit jeder betroffenen SIP-T-Nachricht jeweils zwei ISUP-Nachrichten transparent übertragen, nämlich die erste Nachricht kodiert gemäß der nationalen ISUP-Variante und die zweite Nachricht kodiert im internationalen ITU-T Format.

Für das internationale Format wird speziell der Base Value in dem ISUP Mime Content der SIP-T Nachricht auf "itu-t92+" gesetzt. Damit ist gewährleistet, dass der Empfänger die ISUP-Nachricht interpretieren kann, weil, wenn das erste Format nicht interpretierbar ist, auf das internationale Format zurückgegriffen werden kann. Es kann davon ausgegangen werden, dass der internationale ITU-T-ISUP in zumindest allen Industrie- und Schwellenländern jeder PSTN-Vermittlungsstelle zur Verfügung steht.

Die Erfindung bietet somit eine einfache Lösung für das Interworkingproblem, weil der Sender der jeweiligen Nachricht dem Empfänger einfach zwei "Sprachen" anbietet; die erste "Sprache" wird unter Umständen nicht vom Empfänger unterstützt, dafür ist die zweite "Sprache" weltweit einsetzbar und garantiert immer einen zuverlässigen Verbindungsaufbau.

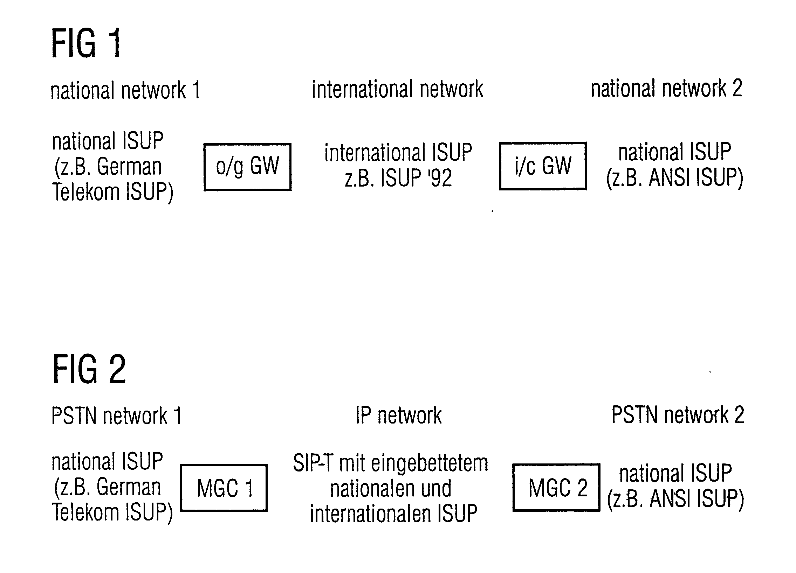

Zur weiteren Verdeutlichung der Erfindung wird Bezug genommen auf die Figuren 1 und 2. Fig. 1 zeigt das oben erwähnte Szenario des Interworking zwischen verschiedenen ISUP-Varianten in einem internationalen Gateway bei herkömmlichen ISUP-Netzen. Fig. 2 zeigt eine erfindungsgemäße Interworking-Variante.

In Fig. 1 ist verdeutlicht, wie bei der Signalisierung zwischen drei Netzen, nämlich einem ersten nationalen Netz national network 1, einem internationalen Netz international network und einem zweiten nationalen Netz national network 2 das abgehende internationale Gateway o/g GW z. B. den nationalen ISUP German Telekom ISUP in den internationalen ISUP "ISUP'92" konvertiert. Am Übergang zwischen dem internationalen Netz und dem zweiten nationalen Netz (Zielnetz) wird im ankommenden internationalen Gateway i/c GW eine weitere Konvertierung in den ANSI ISUP vorgenommen. Hier handelt es sich allerdings nicht um eine Signalisierung über ein SIP/T-Netz.

Fig. 2 zeigt eine Signalisierung im Rahmen eines VoIP-Übertragungsmechanismus zwischen einem ersten öffentlichen Netz PSTN network 1, einem IP-Netz IP network und einem zweiten öffentlichen Netz PSTN network 2, wobei die Begriffe "nationales Netz" und "öffentliches Netz" in Fig. 1 und 2 weitgehend als synonym zu verstehen sind. Jedoch erfolgt bei der vorliegenden Anordnung die Kommunikation über ein SIP-T-Netz. Die Funktion des abgehenden bzw. ankommenden internationalen Gateway in Fig. 1 wird bei der Anordnung nach Fig. 2 durch einen ersten bzw. zweiten Media Gateway Controller MGC1 bzw. MGC2 wahrgenommen. Im Beispiel sind als nationale ISUP wieder German Telekom ISUP und ANSI ISUP angenommen.

## Patentansprüche

1. Signalisierungsverfahren zur Übertragung von Signalisierungsinformationen im Rahmen einer Sprachübertragung oder multimedialen Übertragung über ein IP-Netz vom SIP-T-Typ, welches mit mindestens einem öffentlichen Telekommunikationsnetz verbunden ist,
**dadurch gekennzeichnet, daß**
mit den SIP-T-Nachrichten jeweils eine erste ISUP-Nachricht, kodiert in einem nationalen Format, und eine zweite ISUP-Nachricht, kodiert im internationalen ITU-T-Format, übertragen werden.

2. Signalisierungsverfahren nach Anspruch 1,
**dadurch gekennzeichnet, daß**
für die Kodierung im internationalen ITU-T-Format der Base Value im ISUP Mime Content der SIP-Nachricht auf "itu-t92+" gesetzt wird.

3. Anordnung zur Durchführung des Verfahrens nach Anspruch 1 oder 2,
mit einem IP-Netz vom SIP-T-Typ und mindestens einem die Verbindung zu einem öffentlichen Telekommunikationsnetz herstellenden Media Gateway Controller, in dem Mittel zur parallelen Bereitstellung der ersten und zweiten ISUP-Nachricht in Verbindung mit der SIP-T-Nachricht implementiert sind.

## Claims

1. A signalling method for transmitting signalling information within the framework of a voice transmission or multimedia transmission via an IP network of the SIP-T type which is connected to at least one public telecommunication network,
wherein
a first ISUP message, coded in a national format, and a second ISUP message, coded in the international ITU-T format, are transmitted in each case with the SIP-T messages.

2. The signalling method according to Claim 1,
wherein
the base value in the ISUP mime content of the SIP message is set to "itu-t92+" for coding in the international ITU-T format.

3. An arrangement for implementing the method according to Claim 1 or 2,
comprising an IP network of the SIP-T type and at least one media gateway controller establishing the connection to a public telecommunication network, in which controller means for the parallel provision of the first and second ISUP message in conjunction with the SIP-T message are implemented.

## Revendications

1. Procédé de signalisation pour la transmission d'informations de signalisation dans le cadre d'une transmission de parole ou d'une transmission multimédia au moyen d'un réseau IP du type SIP-T, qui est relié à au moins un réseau de télécommunication public,
**caractérisé en ce que**,
avec les messages SIP-T, à chaque fois un premier message ISUP, codé dans un format national, et un second message ISUP, codé dans le format ITU-T international, sont transmis.

2. Procédé de signalisation selon la revendication 1,
**caractérisé en ce que**,
pour le codage dans le format ITU-T international, la Base Value est placée sur "itu-t92+" dans le ISUP Mime Content du message SIP.

3. Dispositif pour la mise en oeuvre du procédé selon la revendication 1 ou 2,
avec un réseau IP du type SIP-T et au moins un Media Gateway Controller qui établit la liaison avec un réseau de télécommunication public, dans lequel des moyens sont implémentés pour la mise à disposition en parallèle du premier et du second messages ISUP en liaison avec le message SIP-T.
